# EUROPÄISCHE PATENTSCHRIFT

(11) **EP 2 895 829 B1**
(45) Veröffentlichungstag und Bekanntmachung des Hinweises auf die Patenterteilung: **18.05.2016**
(21) Anmeldenummer: 13762151.2
(22) Anmeldetag: 16.09.2013
(51) Int. Cl.: G01K 1/08, G01K 1/16, G01K 13/02

(54) **HOCHTEMPERATURSENSOR MIT VERPRESSTEM SCHUTZROHR**
HIGH TEMPERATURE SENSOR WITH A CRIMPED PROTECTIVE TUBE
CAPTEUR HAUTE TEMPÉRATURE DOTÉ D'UN TUYAU PROTECTEUR COMPRIMÉ

(30) Priorität: 17.09.2012 DE 202012103539 U
(43) Veröffentlichungstag der Anmeldung: 22.07.2015
(73) Patentinhaber: Tesona GmbH & Co. KG, 99819 Hörselberg/Hainich (DE)
(72) Erfinder: LANTZSCH, Heiko, 99817 Eisenach (DE)
(74) Vertreter: Kruspig, Volkmar
(86) Internationale Anmeldenummer: PCT/EP2013/069159
(87) Internationale Veröffentlichungsnummer: WO 2014/041171

(56) Entgegenhaltungen:
- WO-A1-2011/102810
- DE-A1-102011 008 177
- KR-A- 20120 035 548

## Beschreibung

Die vorliegende Erfindung betrifft ein Verfahren zur Herstellung eines Hochtemperatursensors, insbesondere eines Hochtemperatursensors zur Messung der Abgastemperatur von Kraftfahrzeugen, mit einem Sensorelement und einem Schutzrohr, das das Sensorelement zumindest teilweise umgibt gemäß Anspruch 1.

Hochtemperatursensoren kommen zum Beispiel zur Messung der Temperatur in Abgasrohren von Benzinmotoren oder in Öfen zum Einsatz. Sie können dazu geeignet sein, Temperaturen größer 500 °C zu messen. Insbesondere beim Einsatz im Kfz-Bereich, zum Beispiel in Abgas-Reinigungssystemen, sind derartige Hochtemperatursensoren sowohl thermisch als auch mechanisch (bedingt durch die Vibrationen des Motors) hohen Belastungen ausgesetzt. Das Sensorelement zur Messung der Temperatur wird deswegen typischerweise durch eine Schutzhülle, insbesondere ein Schutzrohr, zum Beispiel aus Metall, geschützt.
Aus dem Stand der Technik sind verschiedene Hochtemperatursensoren, insbesondere auch für den Einsatz im Kfz-Bereich bekannt. Insbesondere können derartige Hochtemperatursensoren als Mantelthermoelemente ausgestaltet sein.

Die DE 10 2008 060 033 A1 offenbart einen Temperaturfühler mit einem Thermoelement, der eine hitzebeständige Mantelleitung aufweist, an dessen dem Messmedium zugewandten Ende ein Sensorelement angeordnet ist und bei dem durch ein Mantelrohr der Mantelleitung elektrische Anschlussleitungen für den Anschluss des Sensorelementes an eine elektronische Auswerteeinheit geführt sind. Dabei wird vorgeschlagen, dass eine Schutzhülse vorgesehen wird, die ein einteiliges Vorderteil ohne Schweißstellen aufweist. Zudem wird vorgeschlagen, dass die Schutzhülse an ihrer vorderen, dem Messmedium zugewandten Seite mit einer Rundung versehen ist.

Aus der WO 2010/063682 A1 ist ein Temperaturfühler mit einem ThermoElement vorbekannt, der eine hitzebeständige Mantelleitung aufweist, an dessen dem Messmedium zugewandten Ende ein Sensorelement angeordnet ist. Durch ein Metallrohr der Mantelleitung sind elektrische Anschlussleitungen für den Anschluss des Sensorelements an eine elektronische Auswerteeinheit geführt. Der gezeigte Temperaturfühler soll bis zu Temperaturen von 1200°C einsatzfähig sein und schnelle Temperaturänderungen erfassen können. Hierfür besteht das Sensorelement aus einer Thermodrahtperle, die aus der Mantelleitung herausragt und von einer Schutzhülle aufgenommen ist, welche auf dem dem Messmedium zugewandten Ende der Mantelleitung befestigt ist. Die Schutzhülle weist ein einteiliges Vorderteil ohne Schweißstellen auf und die Mantelleitung ist ein flexibles, dünnwandiges Metallrohr mit einem geringen Außendurchmesser, an dessen dem Messmedium abgewandten Bereich Anschlussdrähte herausgeführt sind, die die gewünschte Verbindung zur Bordelektronik herstellen. Die Befestigung des Temperaturfühlers an der Messstelle erfolgt dabei mit einem speziellen Ringbund und einer Überwurfmutter.

Aus der EP 2 196 787 A2 ist ein Hochtemperatursensor mit einem Sensorelement vorbekannt, das in einem Schutzrohr gelagert ist. Um auch im Umfeld hoher Temperaturen, z.B. im Abgasstrang eines Kraftfahrzeugs zuverlässige Messungen durchzuführen, ist das Schutzrohr von einem Versteifungsrohr umgeben, wobei das Versteifungsrohr aus einem Material besteht, dessen Wärmeausdehnungskoeffizient höher ist als der des Materials, aus dem das Schutzrohr besteht. Das Versteifungsrohr ist einem ersten Bereich des Schutzrohrs mit dem Schutzrohr fest verbunden und in einem zweiten Bereich des Schutzrohrs befindet sich ein Anschlagelement, das ebenfalls fest mit dem Schutzrohr verbunden ist. Das Versteifungsrohr tritt aufgrund seiner höheren Wärmedehnung ab einer vorgegebenen Temperatur in mechanischen Kontakt mit dem Anschlagelement, wodurch der Hochtemperatursensor ab dieser Temperatur mechanisch stabilisierbar ist. Der Raum zwischen dem Sensorelement und der Schutzrohrkappe ist nach EP 2 196 787 A2 mit einem gut wärmeleitenden Material gefüllt. Hierfür kann feines Siliziumpulver zur Anwendung kommen. Das stabilisierende, mechanische Inkontaktkommen des Schutzrohrs mit dem Anschlagelement erfordert eine Mindesttemperatur, so dass insbesondere unmittelbar in der Startphase bzw. im Nicht-Hochleistungsbetrieb die Gesamtanordnung zu Schwingungen neigt, die die Zuverlässigkeit der Messanordnung gefährden. Mit einem Befestigungssockel kann der Hochtemperatursensor dabei im Abgasstrang befestigt werden.

Aus der KR2012 0035548 A ist ein Verfahren zur Herstellung eines Hochtemperatursensors zur Messung der Abgastemperatur von Kraftfahrzeugen bekannt, mit einem Sensorelement und einem Schutzrohr, das das Sensorelement zumindest teilweise umgibt, wobei das Schutzrohr an der heißen Seite des Hochtemperatursensors durch einen Umformprozess mittels Verpressen verschlossen ist.

Es ist eine Aufgabe der Erfindung, einen weiterentwickelten Hochtemperatursensor und ein entsprechendes Verfahren zur Herstellung eines solchen anzugeben, wobei der Hochtemperatursensor effizient zu fertigen und das Sensorelement zuverlässig vor chemischen und mechanischen Belastungen geschützt ist.

Erfindungsgemäß wird diese Aufgabe gelöst durch ein Verfahren mit den Merkmalen des Anspruchs 1. Demnach ist vorgesehen, dass das Schutzrohr an der heißen Seite des Hochtemperatursensors durch einen Umformprozess, insbesondere Verpressen, verschlossen wird.
wird, wobei vor dem Umformprozess in dem Schutzrohr um einen Messabschnitt des Sensorelementes herum ein gut wärmeleitendes, pulverförmiges Füllmaterial angeordnet ist, wobei über den Umformprozess eine Verdichtung des in dem Schutzrohr angeordneten Füllmaterials realisiert und das Schutzrohr derart verpresst wird, dass selbiges nach Verpressung zwei spitzenförmige Abschnitte aufweist.

Vorteilhafterweise kann somit auf eine separate Schutzkappe verzichtet werden. Vielmehr dient das Material des Schutzrohrs selber als Verschluss.

In einer vorteilhaften Ausgestaltung, die kein Teil der Erfindung ist, ist vorgesehen, dass der Umformprozess zumindest teilweise elastisch erfolgt. Bei der teilweise elastischen Umformung kehrt das Schutzrohr also zumindest teilweise in die ursprüngliche Form zurück.

In weiteren Ausgestaltungen, die kein Teil der Erfindung sind, erfolgt die Umformung plastisch, so dass das Schutzrohr die bei dem Umformprozess erhaltene Form beibehält.

In einer weiteren vorteilhaften Ausgestaltung, die kein Teil der Erfindung ist, ist vorgesehen, dass das Schutzrohr radial homogen verpresst wird.

Somit wird das Schutzrohr im Bereich der Verpressung rotationssymmetrisch ausgebildet. Dies ist herstellungstechnisch besonders einfach umzusetzen und ermöglicht zudem eine besonders stabile Verkapselung des Schutzrohrs.

In einer weiteren Ausgestaltung der Erfindung ist vorgesehen, dass das Schutzrohr nach dem Umformprozess verschweißt wird.

Durch das Verschweißen nach dem Umformprozess ergibt sich eine noch dichtere Verkapselung des Hochtemperatursensors, so dass der Hochtemperatursensor auch bei größeren thermischen oder mechanischen Belastungen dicht verschlossen bleibt.

Das in dem Schutzrohr, insbesondere im Schutzrohr um den Messabschnitt, angeordnete Material kann ein gut wärmeleitendes, insbesondere pulverförmiges Material sein. Dessen Verdichtung durch den Umformprozess, z. B. ein plastisches Verpressen des Schutzrohrs, kann zu einer Optimierung der Wärmeleiteigenschaften führen.

In anderen Ausführungsformen, die kein Teil der Erfindung sind, kann die Umformung auch teilweise plastisch sein, d. h. das in dem Schutzrohr angeordnete Material bewirkt eine gewisse Rückverformung des Schutzrohrs.

In einer weiteren Ausgestaltung, die kein Teil der Erfindung ist, ist vorgesehen, dass das Sensorelement nicht mit dem Schutzrohr in Kontakt steht.

In einer weiteren Ausgestaltung, die kein Teil der Erfindung ist, ist vorgesehen, dass ein vor dem Umformprozess in dem Schutzrohr um das Sensorelement herum angeordnetes, gut wärmeleitendes Füllmaterial insbesondere Keramikpulver ist.

Durch die Beabstandung ist insbesondere der Messabschnitt besser geschützt gelagert.

In einer weiteren Ausgestaltung, die kein Teil der Erfindung, ist vorgesehen, dass das Schutzrohr vor, während oder auch nach dem Einstanzen thermisch konditioniert wird.

Insbesondere die Materialhärte oder die Materialsprödigkeit des Schutzrohrs kann günstig beeinflusst werden, so dass sich eine verbesserte Verpressbarkeit, d. h. Duktilität ergibt.

In einer weiteren Ausgestaltung, die kein Teil der Erfindung ist, ist vorgesehen, dass die thermische Konditionierung mittels elektromagnetischer Strahlung, insbesondere mittels Laserlicht und/oder Mikrowellenstrahlung und/oder induktiver Erwärmung erfolgt.

Laserlicht bzw. Mikrowellenstrahlung kann in der Strahlintensität bzw. in der Strahlformung (Strahldicke oder Strahlquerschnitt) entsprechenden Anforderungen angepasst werden kann, um eine verbesserte Konditionierung zu gewährleisten. Zudem kann der Laser auch hinsichtlich seiner zeitlichen Strahlcharakteristik entsprechend eingestellt werden. Somit sind etwa gepulste, kontinuierliche oder auch zeitlich veränderliche Laserintensitäten denkbar. Hierbei eignet sich Laserlicht zur Konditionierung besonders gut, da seine Strahlintensität so hoch eingestellt werden kann, dass das Schutzrohr auch auf atomarer Ebene verändert und beeinflusst werden kann. Gemäß weiterer Ausführungsformen, die kein Teil der Erfindung sind, kann auch eine mechanische Konditionierung im Sinne einer thermischen Konditionierung unter Formveränderung erfolgen, d. h. eine thermische Konditionierung unter Veränderung der atomaren Verbindungen im Schutzrohr, wobei eine makroskopische Formveränderung erreicht wird.

Eine thermische Konditionierung kann ebenfalls durch ein wenigstens bereichsweises Anwärmen, Erhitzen oder Erweichen des Materials des Schutzrohrs erreicht werden. Eine mechanische Konditionierung beinhaltet hierzu im Gegensatz eine wenigstens bereichsweise thermische Materialumformung bzw. Materialverformung und/oder ein thermisches Abtragen bzw. Verdampfen von Material. Die Konditionierung kann Flächenabschnitte des Schutzrohrs betreffen, welche zum mechanischen Verpressen mit dem Verpresswerkzeug in Kontakt sind, oder aber auch Flächenabschnitte, welche während des Verpress-Vorgangs frei liegen.

In einer weiteren Ausgestaltung, die kein Teil Erfindung ist, ist vorgesehen, dass die Konditionierung mittels Ultraschall erfolgt.

In einer weiteren Ausgestaltung, die kein Teil Erfindung ist, ist vorgesehen, dass während und/oder nach dem Umformprozess durch das Schutzrohr ein elektrischer Strom fließt und die thermische Konditionierung durch elektrische Widerstandserwärmung erfolgt.

Durch elektrischen Strom kann die elektrische Leitfähigkeit ausgenutzt werden. Insbesondere kann ein derartiges Verfahren zum Einsatz kommen, wenn der zu verpressende Bereich des Schutzrohrs aus einem Material gebildet ist, das einen anderen elektrischen Widerstand aufweist als der Rest des Schutzrohrs. Somit fällt in dem Material mit geringerem Widerstand im zu verpressenden Bereich eine höhere Verlustleistung an und es kommt zu einer lokalen Erwärmung genau im Zielbereich.

Die Erfindung soll nachstehend anhand von Ausführungsbeispielen und unter Zuhilfenahme von Figuren näher erläutert werden.

Hierbei zeigen:
- Fig. 1a: eine seitliche Ansicht eines ersten Hochtemperatursensors;
- Fig. 1b: eine Querschnittsansicht des Hochtemperatursensors aus Fig. 1a;
- Fig. 1c: eine Detailansicht des Bereichs B aus Fig. 1b;
- Fig. 2a: eine seitliche Ansicht eines zweiten, erfindungsgemäßen Hochtemperatursensors;
- Fig. 2b: eine Querschnittsansicht des Hochtemperatursensors aus Fig. 2a;
- Fig. 2c: eine Detailansicht des Bereichs B aus Fig. 2a und
- Fig. 2d: eine Detailansicht des Bereichs C aus Fig. 2b.

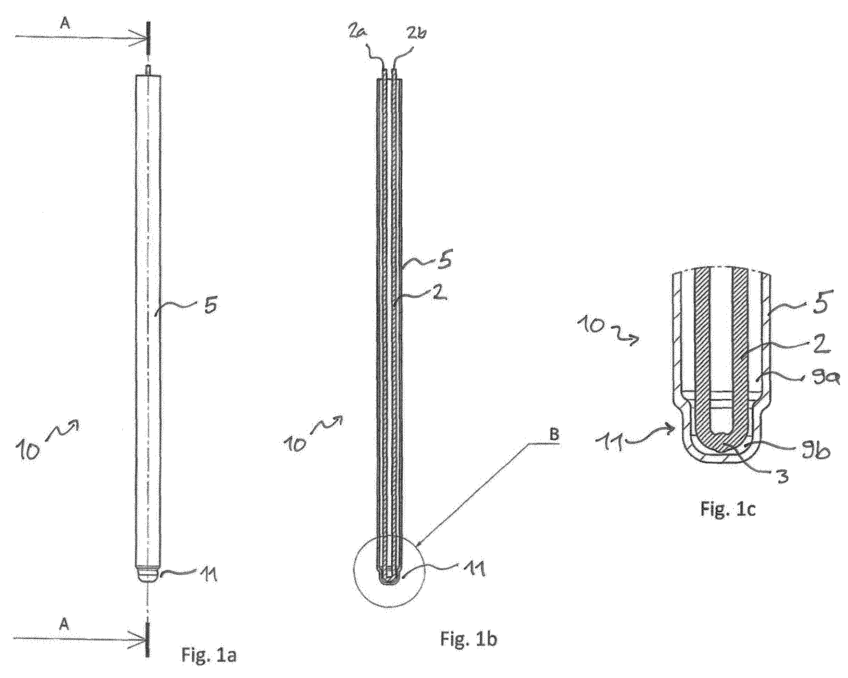

Fig. 1a zeigt einen ersten Hochtemperatursensor 10, dessen Schutzrohr 5 in einem Verpressungs-Abschnitt 11 radial homogen verpresst wurde. Im Verpressungs-Abschnitt 11 hat das Schutzrohr somit einen reduzierten Durchmesser. Die Spitze des Hochtemperatursensors 10 ist dabei abgeflacht ausgestaltet.

Fig. 1b zeigt eine Querschnittsansicht des Hochtemperatursensors 10 aus Fig. 1a. die Schnittebene verläuft dabei entlang dem Sensorelement 2. Am kalten Ende des Hochtemperatursensors 10 befinden sich die elektrischen Anschlüsse 2a;2b. Am heißen Ende befindet sich der Verpressungs-Abschnitt 11.

Fig. 1c zeigt eine Detailansicht des Bereichs B aus Fig. 1b. Dabei ist insbesondere ersichtlich, dass das Sensorelement 2 und sein Messabschnitt 3 das Schutzrohr 5 nicht berühren, auch nicht in dem Verpressungs-Abschnitt 11, in dem das Schutzrohr 5 einen reduzierten Durchmesser aufweist.

Im Verpressungs-Bereich 11 wurde das um den Messabschnitt 3 herum angeordnete gut wärmeleitende Material 9b bei der Verpressung des Schutzrohres 5 verdichtet bzw. komprimiert, wodurch die Wärmeleitung von der Außenseite des Hochtemperatursensors zum Messabschnitt 3 verbessert ist.

In dem axialen Abschnitt des Schutzrohrs 5 außerhalb des Verpressungs-Abschnitts 11 befindet sich um das Sensorelement 2 ein Füllmaterial 9a, das von dem gut wärmeleitenden Füllmaterial 9b verschieden ist.

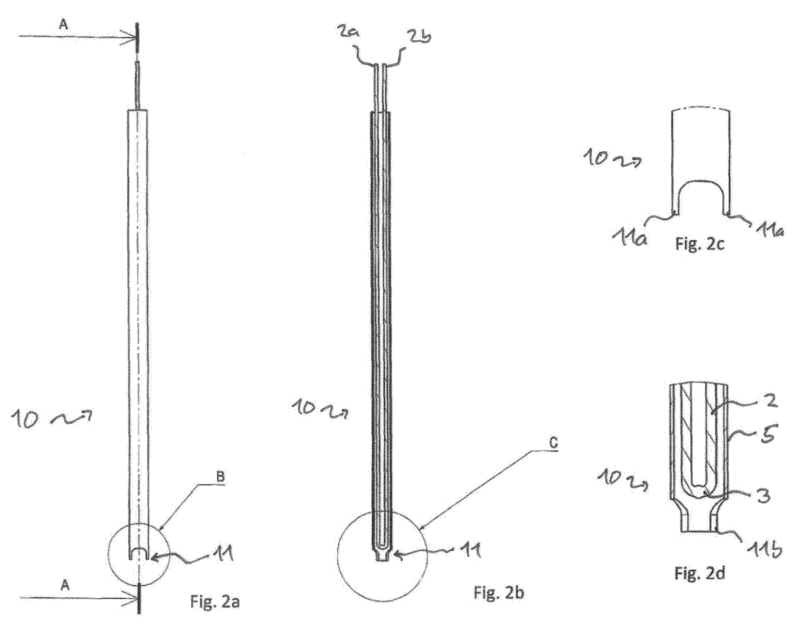

In den Figuren 2a bis 2d ist ein Ausführungsbeispiel eines erfindungsgemäßen Hochtemperatursensors 10 gezeigt. Deren Ausgestaltung ist dabei im Wesentlichen vergleichbar zu der des Hochtemperatursensors aus den Figuren 1a bis 1c. Bei diesem Ausführungsbeispiel erfolgt die Verpressung aber nicht gleichförmig radial, sondern innerhalb der in Fig. 2b gezeigten Schnittebene. Es ergibt sich somit im Verpressungs-Abschnitt 11 keine gleichmäßige Reduktion des Durchmessers des Schutzrohrs 5, sondern es bildet sich eine seitlich förmige Kontur des Verpressungs-Abschnitts 11 mit zwei Spitzen 11a und einem eingeengten Bereich 11b. Die dünnen Spitzen aus dem gut wärmeleitenden Material des Schutzrohrs 5 ermöglichen eine besonders gute Wärmeübertragung zum Messabschnitt 3.

## Patentansprüche

1. Verfahren zur Herstellung eines Hochtemperatursensors (10) zur Messung der Abgastemperatur von Kraftfahrzeugen, mit einem Sensorelement (2) und einem Schutzrohr (5), das das Sensorelement (2) zumindest teilweise umgibt,
wobei das Schutzrohr (5) an der heißen Seite des Hochtemperatursensors (10) durch einen Umformprozess mittels Verpressen verschlossen wird,
**dadurch gekennzeichnet,**
**dass** vor dem Umformprozess in dem Schutzrohr (5) um einen Messabschnitt (3) des Sensorelementes (2) herum ein gut wärmeleitendes, pulverförmiges Füllmaterial (9b) angeordnet ist, wobei über den Umformprozess eine Verdichtung des in dem Schutzrohr (5) angeordneten Füllmaterials realisiert und das Schutzrohr (5) derart verpresst wird, dass selbiges nach Verpressung zwei spitzenförmige Abschnitte (11a; 11b) aufweist.

2. Verfahren nach Anspruch 1,
**dadurch gekennzeichnet, dass**
das Schutzrohr (5) nach dem Umformprozess verschweißt wird.

## Claims

1. A method for producing a high-temperature sensor (10) for measuring the exhaust gas temperature of motor vehicles, comprising a sensor element (2) and a protective tube (5) which at least partially surrounds the sensor element (2), wherein the protective tube is closed on the hot side of the hot-temperature sensor (10) by a shaping process by means of press-moulding, **characterized in that** a filling material (9b) in powder form and with good thermal conductivity is arranged before the press-moulding process in the protective tube (5) around a measuring section (3) of the sensor element (2), wherein a compaction of the filling material arranged in the protective tube (5) is realised via the press-moulding process, and the protective tube (5) is press-moulded in such a way that said tube comprises two peak-shaped sections (11a; 11b) after pressing.

2. A method according to claim 1, **characterized in that** the protective tube (5) is welded after the press-moulding process.

## Revendications

1. Procédé pour la fabrication d'un capteur haute température (10) pour mesurer la température des gaz d'échappement de véhicules automobiles, comprenant un élément capteur (2) et un tube protecteur (5) qui entoure au moins partiellement l'élément capteur (2),
dans lequel le tube protecteur (5) est obturé par un processus de déformation au moyen d'un pressage sur le côté chaud du capteur haute température (10),
**caractérisé en ce qu'**avant le processus de déformation un matériau de remplissage en forme de poudre et bon conducteur de la chaleur (9b) est agencé dans le tube protecteur (5) autour d'un tronçon de mesure (3) de l'élément capteur (2),
dans lequel on réalise, via le processus de déformation, un compactage du matériau de remplissage agencé dans le tube protecteur (5) et le tube protecteur (5) est pressé de telle façon que celui-ci présente après le pressage deux tronçons en forme de pointe (11a ; 11b).

2. Procédé selon la revendication 1,
**caractérisé en ce que** le tube protecteur (5) est soudé après le processus de déformation.
